Europäisches Patentamt

European Patent Office

Office européen des brevets

(11) Veröffentlichungsnummer: **0 304 555 B1**

(19)

(12) **EUROPÄISCHE PATENTSCHRIFT**

(45) Veröffentlichungstag der Patentschrift: **04.03.92**

(51) Int. Cl.⁵: **B65G 21/08**, B67C 7/00

(21) Anmeldenummer: **88108472.7**

(22) Anmeldetag: **27.05.88**

(54) **Lärmschutzvorrichtung für eine Horizontalförderanlage.**

(30) Priorität: **24.08.87 DE 8711472 U**

(43) Veröffentlichungstag der Anmeldung:
**01.03.89 Patentblatt 89/09**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
**EP-A- 0 102 910**
**DE-A- 3 136 761**
**DE-U- 8 211 683**
**FR-A- 2 454 986**

(73) Patentinhaber: **FIRMA ULRICH HEIN**
**Nordstrasse 49a**
**W-4750 Unna-Massen(DE)**

(72) Erfinder: **Hein, Ulrich, Dipl.Ing.**
**Nordstrasse 49a**
**W-4750 Unna-Massen(DE)**

(74) Vertreter: **Resch, Michael, Dipl.-Phys.**
**Betten & Resch Patentanwälte Reichenbach-**
**strasse 19**
**W-8000 München 5(DE)**

## Beschreibung

Die Erfindung betrifft eine Lärmschutzvorrichtung für eine Horizontalförderanlage, mit einer Trägerkonstruktion und mit mehreren, von der Trägerkonstruktion getragenen, die Förderanlage samt dem hierauf geförderten Gut in Längsrichtung zumindest teilweise tunnelförmig umschließenden Wänden aus schalldämmendem Material, die zusammen ein schalldämmendes Gehäuse bilden, wobei zumindest eine der Wände von einer vertikal verstellbaren Abdeckplatte gebildet ist.

Insbesondere bezieht sich die Erfindung auf eine Lärmschutzvorrichtung für ein- oder mehrspurige Transporteinrichtungen wie Transporteure und Transportbänder für die Getränke-, Nahrungsmittel- und Genußmittelindustrie sowie für die pharmazeutische Industrie, und speziell auf solche Transporteinrichtungen, die zum Transport von Flaschen dienen.

Eine solche Lärmschutzvorrichtung ist beispielsweise aus dem DE-GM 82 11 683 bekannt. In Gefäßabfüllbetrieben, in denen die Gefäße auf Horizontalförderanlagen eine Reihe von Arbeitsstationen, wie Reinigungsmaschinen, Kontrollstationen, Abfüllmaschinen, Verschließmaschinen, Etikettiermaschinen usw. durchlaufen, herrscht üblicherweise ein sehr hoher Lärmpegel, der für das Bedienungspersonal gesundheitsschädlich sein kann. Man geht daher in verstärktem Maße dazu über, die Förderanlagen mit Lärmschutzsystemen insbesondere in Form von schalldämmenden Wänden zu versehen. Allerdings besteht bei solchen Schallschutzeinrichtungen die Forderung, jederzeit einen möglichst ungehinderten Zugang zu den Fördereinrichtungen und dem geförderten Gut zu ermöglichen, damit etwa auftretende Störungen schnell behoben werden können. Zu diesem Zwecke ist es bekannt, eine oder mehrere der die Längsseiten bildenden Seitenwände der Lärmschutzvorrichtung in vertikaler Richtung verschiebbar auszubilden.

Die bekannte Lärmschutzeinrichtung ist so aufgebaut, daß sie ein rahmenartiges Gestell aus vertikalen Pfosten, die durch Längs- und Querträger miteinander verbunden sind, umfaßt, wobei die Seitenwände der Lärmschutzvorrichtung an diesem rahmenartigen Gestell befestigt sind und wobei das Dach der Lärmschutzvorrichtung auf die Rahmenkonstruktion aufsteckbar ist.

Der Erfindung liegt insbesondere die Aufgabe zugrunde, eine gegenüber dem bekannten Stand der Technik einfachere Lärmschutzvorrichtung der eingangs genannten Gattung zu schaffen.

Diese Aufgabe wird im wesentlichen dadurch gelöst, daß die Trägerkonstruktion von zu einer Seite des Gehäuses angeordneten Ständern gebildet ist, an denen zumindest das diesen Ständern zugewandte Gehäuseteil in Richtung der Ständer verschieblich gelagert ist.

Gemäß einer bevorzugten Ausführungsform der Erfindung ist hierbei der den Ständern abgewandte Gehäuseteil am Ständer unbeweglich befestigt. In alternativer Weise kann gemäß einer weiteren bevorzugten Ausführungsform der Erfindung die Anordnung derart sein, daß das gesamte Gehäuse an den Ständern verschieblich gelagert ist.

Im Falle der zuerst genannten Alternative ist zweckmäßigerweise vorgesehen, daß am Ständer starr befestigte Rahmenteile den unbeweglich befestigten Gehäuseteil tragen. Der unbeweglich befestigte Gehäuseteil umfaßt hierbei vorzugsweise die dem Ständer gegenüberliegende Seitenwand, das Dach und vorzugsweise zumindest einen Teil der unteren Abschottung, während der verschiebliche Gehäuseteil die dem Ständer zugewandte Seitenwand, vorzugsweise zumindest einen Teil der unteren Abschottung sowie einen in Richtung des Daches verlaufenden oberen Bandabschnitt umfaßt, der im geschlossenen Zustand des Gehäuses mit dem Dach zur Ausbildung einer akustischen Dichtung eine Überlappung bildet.

Wenn gemäß einer bevorzugten Ausführungsform der Erfindung der verschiebliche Gehäuseteil aus seiner geschlossenen Stellung in Richtung nach unten verschiebbar ist, so sind die aufeinanderzu weisenden Kanten der unteren Abschottungen des unbeweglichen Gehäuseteils und des verschieblichen Gehäuseteils vorzugsweise nahe beieinander liegend angeordnet, so daß sie lediglich einen relativ schmalen Spalt definieren, der ein Ablaufen von Flüssigkeiten aus der Lärmschutzvorrichtung gestattet. Gegebenenfalls können die unteren Abschottungen sich auch unter Beibehaltung eines Spalts in geringem Umfang überlappen.

Im Falle der zweiten alternativen Ausführungsform, bei der das gesamte Gehäuse an den Ständern verschieblich gelagert ist, ist vorzugsweise vorgesehen, daß das Gehäuse aus seiner Funktionsstellung in seine Offenstellung nach oben verschieblich ist. Hierbei umfaßt das Gehäuse vorzugsweise zwei gegenüberliegende Seitenwände, ein die beiden Seitenwände verbindendes geschlossenes Dach und zwei untere, von je einer Seitenwand nach innen verlaufende Abschottungen.

Die beiden Gehäuseteile im Falle der ersten alternativen Ausführungsform bzw. das Gehäuse im Falle der zweiten alternativen Ausführungsform sind vorzugsweise jeweils einstückig ausgebildet und bestehen aus durchsichtigem Kunststoff, vorzugsweise, Polycarbonat, um jederzeit freien Blick in das Innere der tunnelförmigen Lärmschutzvorrichtung zu haben.

Das verschiebliche Gehäuse bzw. Gehäuseteil ist vorzugsweise an an den Ständern ausgebildeten Führungsschienen geführt, wobei die Führungsschienen vorzugsweise entweder von U-förmigen Führungsprofilen gebildet sind, in denen die Seitenkanten des geführten Gehäuseteils laufen, oder wobei das verschiebliche Gehäuse bzw. Gehäuseteil mit Schiebehülsen verbunden ist, welche an an den Ständern befesigten Führungsrohren bzw. Führungsstangen geführt sind. Selbstverständlich können im Bedarfsfall auch andere Führungseinrichtungen vorgesehen sein. Um ein besonders leichtgängiges Verschieben das verschieblichen Gehäuses bzw. Gehäuseteils zu ermöglichen, kann es zweckmäßig sein, das verschiebliche Gehäuse bzw. Gehäuseteil über Kugellager an den Ständern zu führen.

Das Verschieben des verschieblichen Gehäuses bzw. Gehäuseteils kann beispielsweise mittels Pneumatikzylinder oder auch über einen motorischen Antrieb erfolgen. Wenn in bevorzugter Ausgestaltung der Erfindung das zu verschiebende Gehäuse bzw. Gehäuseteil mit dem einen Ende zumindest eines Zugseils verbunden ist, welches um zumindest eine am Ständer befestigte Umlenkrolle verläuft und an seinem anderen Ende ein Kontergewicht trägt, so kann in diesem Falle auf einen pneumatischen oder motorischen Antrieb verzichtet werden und aufgrund der Leichtgängigkeit der Verschiebung kann das Gehäuse bzw. das verschiebliche Gehäuseteil ohne weiteres von Hand verschoben werden.

Die erfindungsgemäße Lärmschutzvorrichtung vermindert bei einfachem Aufbau und zuverlässiger Handhabung in hohem Maße die Lärmabstrahlung durch das zu transportierende Gut und erweist sich auch unter hygienischen Gesichtspunkten als besonders vorteilhaft, nachdem sie aufgrund der Abkapselung des Innenraums gegenüber der Umgebungsluft zuverlässig verhindert, daß sich Fremdkörper aus der Umgebung an das zu transportierende Gut anlagern.

Weitere vorteilhafte Merkmale der Erfindung sind den übrigen Unteransprüchen sowie der nachfolgenden Beschreibung zu entnehmen, in der zwei bevorzugte Ausführungsbeispiele der Erfindung anhand der Zeichnung näher beschrieben werden. In der Zeichnung zeigen in halbschematischer Darstellung:

Fig. 1 eine Seitenansicht einer erfindungsgemäßen Lärmschutzvorrichtung einer ersten alternativen Bauart mit einem feststehenden und einem verschieblichen Gehäuseteil, und

Fig. 2 eine Seitenansicht einer erfindungsgemäßen Lärmschutzvorrichtung einer zweiten alternativen Bauart, bei der das gesamte Gehäuse verschieblich ist.

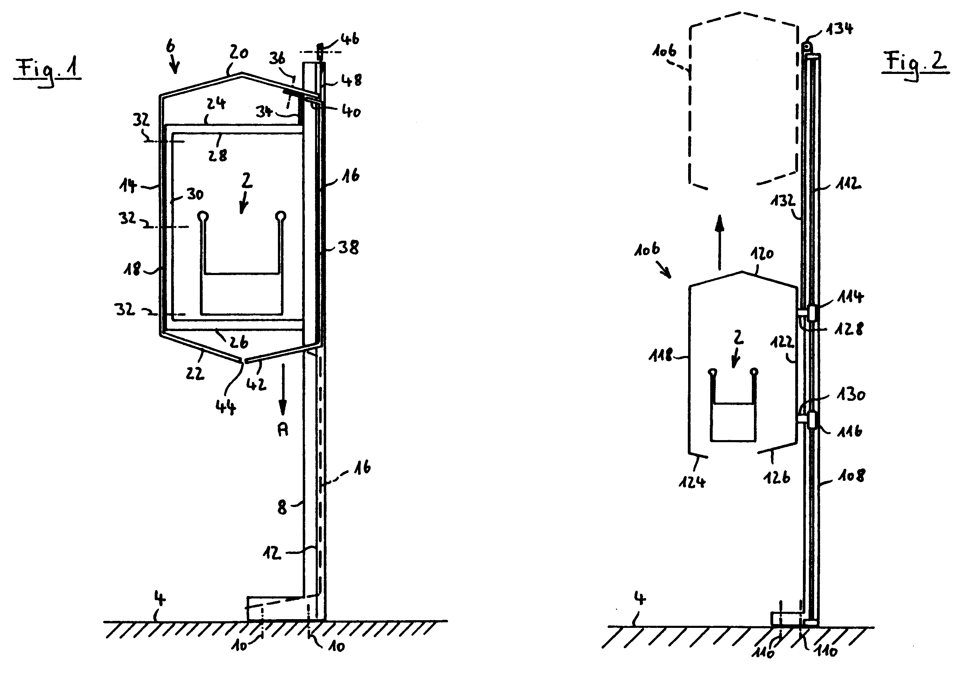

Zunächst wird auf des Ausführungsbeispiel gemäß Fig. 1 Bezug genommen. Mit der Bezugsziffer 2 ist die Fördereinrichtung einer im übrigen nicht näher dargestellten Förderanlage bezeichnet. Die Fördereinrichtung 2 befindet sich im Abstand oberhalb des Bodens 4 und ist von einem Lärmschutzgehäuse 6 umgeben, derart, daß es das gesamte Querprofil der Fördereinrichtung 2 einschließlich des hierauf geförderten Guts wie beispielsweise Flaschen mit ausreichendem Abstand umschließt.

Das Gehäuse 6 ist an einem oder mehreren vertikalen Ständern 8 getragen, wobei jeder Ständer 8 über geeignete Füße 10 am Boden 4 verankert ist. In der Praxis weist jedes Gehäuse 6 in Richtung der Fördereinrichtung 2 eine Länge von etwa 3 Metern auf und es werden dementsprechend mehrere Gehäuse 6 zur vollständigen Umtunnelung der Fördereinrichtung 2 aneinandergereiht. Für jedes Gehäuse 6 können ein oder zwei Ständer 8 vorgesehen sein, wobei die Ständer 8 vorzugsweise im Stoßbereich zweier Gehäuse 6 angeordnet sind und somit jeder Ständer 8 die sich gegenüberliegenden Endbereiche zweier benachbarter Gehäuse 6 trägt.

Die Ständer 8 sind als Hohlprofile mit rechteckförmigem Querschnitt ausgebildet und weisen seitliche, in Längsrichtung der Ständer 8 verlaufende U-förmige Führungsschienen 12 auf, die zur Führung der beweglichen Teile des Gehäuses 6 dienen.

Das Gehäuse 6 umfaßt einen an den Ständern 8 unbeweglich befestigten Gehäuseteil 14 sowie einen an den Ständern 8 verschieblich geführten, beweglichen Gehäuseteil 16. Der unbewegliche Gehäuseteil 14 umfaßt die dem Ständer 8 gegenüberliegende Seitenwand 18 des Gehäuses, das Dach 20 das Gehäuses und eine einen Teil des Bodens des Gehäuses bildende untere Abschottung 22, welche sich bis etwa zur vertikalen Mittelebene des Gehäuses erstreckt und von außen nach innen geneigt ist. Seitenwand 18, Dach 20 und untere Abschottung 22 sind einstückig ausgebildet und bestehen aus durchsichtigem Polycarbonat.

Am Ständer 8 ist ein sich quer zur Förderrichtung erstreckender Rahmen 24 befestigt, dessen unterer, horizontaler Schenkel 26 unterhalb der Fördereinrichtung 2 verläuft, dessen oberer horizontaler Schenkel 28 oberhalb der Fördereinrichtung 2 nahe dem Dach 20 des Gehäuses 6 verläuft und dessen vertikaler Schenkel 30 die dem Ständer 8 gegenüberliegenden Enden der Schenkel 26 und 28 verbindet. Am vertikalen Schenkel 30 des Rahmens 24 ist die Seitenwand 18 des unbeweglichen Gehäuseteils 14 mittels Schrauben 32 festgeschraubt. Ein abgewinkelter Träger 34 ist am oberen Bereich des Ständers 8 befestigt, wobei das dem Ständer 8 zugewandte freie Ende des Daches 20 des Gehäuses 6 über Schrauben 36 am abgewinkelten Schenkel des Trägers 34 befestigt ist.

Das bewegliche Gehäuseteil 16 umfaßt die dem Ständer 8 zugewandte Seitenwand 38, einen oberen Wandabschnitt. 40, der Gegenüber der Seitenwand 38 in Richtung des Daches 20 nach innen oben abgewinkelt ist sowie eine untere Abschottung 42, welche sich von der Seitenwand 38 bis nahe zur vertikalen Mittelebene des Gehäuses 6 erstreckt, nach innen unten geneigt ist und der unteren Abschottung 22 des unbeweglichen Gehäuseteils 14 unter Bildung eines Spaltes 44 gegenüberliegt. Der Wandabschnitt 40 befindet sich im geschlossenen Zustand des beweglichen Gehäuseteils 16 knapp unterhalb des freien Endes des Daches 20, so daß sich in diesem Bereich eine Überlappung zwischen beweglichem und unbeweglichem Gehäuseteil 16 bzw. 14 ergibt. Seitenwand 38, Wandabschnitt 40 und untere Abschottung 42 sind einstückig ausgebildet und bestehen ebenso wie das unbewegliche Gehäuseteil 14 aus durchsichtigem Polycarbonat.

Am oberen Ende des Ständers 8 ist eine Seilrolle 46 um eine horizontale Achse drehbar gelagert, und ein um die Seilrolle 46 gelegtes Seil 48 ist mit seinem einen Ende mit dem beweglichen Gehäuseteil 16 und mit seinem anderen Ende mit einem nicht näher dargestellten Gegengewicht verbunden, welches im Inneren des Ständers 8 geführt ist und so bemessen ist, daß es dem Gewicht des beweglichen Gehäuseteils 16 entspricht.

Zum Öffnen des Gehäuses 6 wird das bewegliche Gehäuseteil 16 von Hand nach unten in Pfeilrichtung A verschoben, wobei zu diesem Zweck die Seitenwand 38 mit einer entsprechenden, nicht näher dargestellten Handhabe versehen sein kann. Die geöffnete Position des beweglichen Gehäuseteils 16 ist in Fig. 1 gestrichelt dargestellt. In der geöffneten Position des Gehäuseteils 16 ist die Fördereinrichtung 2 und das hierauf befindliche Gut von der Seite der Ständer 8 her vollständig zugänglich.

Es ist anzumerken, daß die beschriebene Lärmschutzvorrichtung insbesondere beispielsweise dann, wenn die Fördereinrichtung 2 nahe dem Boden 4 angeordnet ist, ohne weiteres so abgewandelt werden kann, daß das bewegliche Gehäuseteil 16 aus seiner geschlossenen Stellung nach oben verschoben wird.

Im folgenden wird auf das Ausführungsbeispiel gemäß Fig. 2 Bezug genommen. Im Falle dieses Ausführungsbeispiels ist das Gehäuse 106 als Ganzes verschieblich am Ständer 108 gelagert. Der Ständer 108 ist wiederum mittels geeigneter Füße 110 am Boden 4 abgestützt. Wie im Falle des Ausführungsbeispiels gemäß Fig. 1 können die Ständer 108 insbesondere im Bereich zweier benachbarter Gehäuse 106 angeordnet sein. Der Ständer 108 weist an beiden Seiten parallel zum Ständer verlaufende Führungsstangen 112 auf, an denen kugelgelagerte Schiebehülsen 114, 116 geführt sind. Diese Schiebehülsen 114, 116 sind über Befestigungselemente 128, 130 mit der dem Ständer 108 zugewandten Seitenwand 122 des Gehäuses 106 verbunden. Das Gehäuse 122 ist insgesamt einstückig ausgebildet, besteht aus durchsichtigem Polycarbonat und umfaßt die beiden Seitenwände 118, 122, das die beiden Seitenwände verbindende Dach 120 sowie gegebenenfalls untere Abschottungen 124, 126, die jedoch kürzer sind als im Falle des Ausführungsbeispiels gemäß Fig. 1 und voneinander soweit beabstandet sind, daß beim Anheben des Gehäuses 106 die Fördereinrichtung 1 zwischen den beiden unteren Abschottungen 124, 126 aus dem Gehäuse 106 austreten kann.

Das tunnelförmige Gehäuse 106 ist, beispielsweise im Bereich des Befestigungselements 128, mit dem einen Ende eines Seils 132 verbunden, welches über eine am oberen Ende des Ständers 108 gelagerte Seilrolle 134 geführt ist und an seinem anderen Ende ein nicht näher dargestelltes Gegengewicht trägt, welches im Inneren des Ständers 108 verschiebbar angeordnet ist und für einen entsprechenden Gewichtsausgleich sorgt, so daß das Gehäuse 106 ohne weitere Maßnahmen in jeder gewünschten vertikalen Position verbleibt.

Falls Zugang zu der Fördereinrichtung 2 gewünscht wird, wird das Gehäuse 106 aus der in Fig. 2 dargestellten unteren Position von Hand in die in Fig. 2 gestrichelt dargestellte obere Position verschoben, so daß die Fördereinrichtung 2 vollkommen freigegeben wird und von allen Seiten zugänglich ist.

Die Anwendung der erfindungsgemäßen Lärmschutzvorrichtung erfolgt insbesondere im Bereich von Transporteuren der Flaschenvereinzelungen, wo die Flaschen von mehrspurigen Bändern pulkweise ankommend vereinzelt werden und dann einzeln in die Bearbeitungsstationen einlaufen. Wesentliche Vorteile der erfindungsgemäßen Lärmschutzvorrichtung sind ihr geringer Platzbedarf, ihr einfacher Aufbau sowie die hervorragende Zugänglichkeit zu den Fördereinrichtungen.

**Patentansprüche**

1. Lärmschutzvorrichtung für eine Horizontalförderanlage, mit einer Trägerkonstruktion und mit mehreren, von der Trägerkonstruktion getragenen, die Förderanlage samt dem hierauf geförderten Gut in Längsrichtung zumindest teilweise tunnelförmig umschließenden Wänden aus schalldämmendem Material, die zusammen ein schalldämmendes Gehäuse bilden, wobei zumindest eine der Wände von einer vertikal verstellbaren Abdeckplatte gebildet ist, dadurch gekennzeichnet, daß die Trägerkonstruktion von zu einer Seite des Gehäuses (6, 106) angeordneten Ständern (8, 108) gebildet ist, an denen zumindest das diesen Ständern (8, 108) zugewandte Gehäuseteil (16, 106) in Richtung der Ständer verschieblich gelagert ist.

2. Lärmschutzvorrichtung nach Anspruch 1, dadurch gekennzeichnet, daß der den Ständern (8) abgewandte Gehäuseteil (14) am Ständer (8) unbeweglich befestigt ist.

3. Lärmschutzvorrichtung nach Anspruch 2, dadurch gekennzeichnet, daß am Ständer (8) starr befestigte Rahmenteile (24) den unbeweglich befestigten Gehäuseteil (14) tragen.

4. Lärmschutzvorrichtung nach Anspruch 2 oder 3, dadurch gekennzeichnet, daß der unbeweglich befestigte Gehäuseteil (14) die dem Ständer (8) gegenüberliegende Seitenwand (18), das Dach (20) und vorzugsweise zumindest einen Teil (22) der unteren Abschottung umfaßt.

5. Lärmschutzvorrichtung nach Anspruch 4, dadurch gekennzeichnet, daß der verschiebliche Gehäuseteil (16) die dem Ständer (8) zugewandte Seitenwand (38), vorzugsweise zumindest einen Teil (42) der unteren Abschottung und einen in Richtung des Daches (20) verlaufenden oberen Wandabschnitt (40) umfaßt, der im geschlossenen Zustand des Gehäuses (6) mit dem Dach (20) eine Überlappung bildet.

6. Lärmschutzvorrichtung nach Anspruch 4 und 5, dadurch gekennzeichnet, daß der verschiebliche Gehäuseteil (16) aus seiner geschlossenen Stellung in Richtung nach unten verschiebbar ist und daß die aufeinanderzu weisenden Kanten der unteren Abschottungen (22, 42) nahe beieinander liegend angeordnet sind.

7. Lärmschutzvorrichtung nach einem der Ansprüche 2 bis 6, dadurch gekennzeichnet, daß die Gehäuseteile (14, 16) jeweils einstückig ausgebildet sind.

8. Lärmschutzvorrichtung nach Anspruch 1, dadurch gekennzeichnet, daß das gesamte Gehäuse (106) an den Ständern (108) verschieblich gelagert ist.

9. Lärmschutzvorrichtung nach Anspruch 8, dadurch gekennzeichnet, daß das Gehäuse (106) aus seiner Funktionsstellung in seine Offenstellung nach oben verschieblich ist.

10. Lärmschutzvorrichtung nach Anspruch 9, dadurch gekennzeichnet, daß das Gehäuse (106) zwei gegenüberliegende Seitenwände (118, 122), das die beiden Seitenwände verbindende Dach (120) und ggf. zwei untere, von je einer Seitenwand nach innen verlaufende Abschottungen (124, 126) umfaßt.

11. Lärmschutzvorrichtung nach einem der Ansprüche 8 bis 10, dadurch gekennzeichnet, daß das Gehäuse (106) einstückig ausgebildet ist.

12. Lärmschutzvorrichtung nach einem der vorhergehenden Ansprüche, dadurch gekennzeichnet, daß das Gehäuse (6, 106) aus vorzugsweise durchsichtigem Polycarbonat besteht.

13. Lärmschutzvorrichtung nach einem der vorhergehenden Ansprüche, dadurch gekennzeichnet, daß das verschiebliche Gehäuse (106) bzw. Gehäuseteil (16) an an den Ständern (8, 108) ausgebildeten Führungsschienen (12, 112) geführt ist.

14. Lärmschutzvorrichtung nach Anspruch 13, dadurch gekennzeichnet, daß die Führungsschienen (12) von U-förmigen Führungsprofilen gebildet sind.

15. Lärmschutzvorrichtung nach Anspruch 13, dadurch gekennzeichnet, daß das verschiebliche Gehäuse (106) bzw. Gehäuseteil (16) mit Schiebehülsen (114, 116) verbunden ist, welche an an den Ständern (8, 108) befestigten Führungsrohren bzw. Führungsstangen (112) geführt sind.

16. Lärmschutzvorrichtung nach einem der Ansprüche 13 bis 15, dadurch gekennzeichnet, daß das verschiebliche Gehäuse (106) bzw. Gehäuseteil (16) über Kugellager an den Ständern (8, 108) geführt sind.

17. Lärmschutzvorrichtung nach einem der vorhergehenden Ansprüche, dadurch gekennzeichnet, daß das verschiebliche Gehäuse (106) bzw. Gehäuseteil (16) mit dem einen Ende zumindest eines Zugseils (48, 132) verbunden ist, welches um zumindest eine am Ständer (8, 108) befestigte Umlenkrolle (46, 134) umläuft und an seinem anderen Ende ein Gegengewicht trägt.

18. Lärmschutzvorrichtung nach Anspruch 17, dadurch gekennzeichnet, daß das Gegengewicht im Inneren des Ständers (8, 108) geführt ist.

**Claims**

1.  Noise protection device for a horizontal conveyor with a carrier construction with several walls of sound damping material carried by the carrier construction and at least partially surrounding the together with the goods conveyed thereon in the longitudinal direction in the shape of a tunnel, which together for a sound damping housing wherein at least one of the walls is formed by a vertically adjustable cover plate characterised in that the carrier construction is formed by stands (8, 108) arranged to one side of the housing (6, 106) on which at least the housing part (16, 106) turned towards these stands (8, 108) is mounted movably in the direction of the stands.

2.  Noise protection device according to claim 1 characterised in that the housing part (14) turned away from the stands (8) is fixed immovably to the stands (8).

3.  Noise protection device according to claim 2 characterised in that frame components (24) fixed rigidly to the stands (8) carry the immovably fixed housing part (14).

4.  Noise protection device according to claim 2 or 3 characterised in that the immovably fixed housing part (14) comprises the side wall (18) lying opposite to the stand (8), the roof (20) and preferably at least a part (22) of the lower casing.

5.  Noise protection device according to claim 4 characterised in that the movable housing part (16) comprises the side wall (38) towards the stands (8), preferably at least a part (42) of the lower casing and an upper wall section (40) running in the direction of the roof (20) which in the closed condition of the housing (6) forms an overlap region with the roof (20).

6.  Noise protection device according to claim 4 and 5 characterised in that the movable housing part (16) is movable from its closed position in a direction downwardly and that the edges of the lower casing directed towards one another (22, 42) are arranged to lie closely adjacent one another.

7.  Noise protection device according to one of claims 2 to 6 characterised in that the housing parts (14, 16) are constructed in each case in one piece.

8.  Noise protection device according to claim 1 characterised in that the entire housing (106) is mounted movably on the stands (108).

9.  Noise protection device according to claim 8 characterised in that the housing (106) is movable upwardly from its working position into its open position.

10. Noise protection device according to claim 9 characterised in that the housing (106) comprises two oppositely lying side walls (118, 122), the roof (120) connecting both side walls and optionally two lower casing parts (124, 126) running in each case inwardly from a side wall.

11. Noise protection device according to one of claims 8 to 10 characterised in that the housing (106) is constructed in one piece.

12. Noise protection device according to one of the preceding claims characterised in that the housing (6, 106) consists of preferably transparent polycarbonate.

13. Noise protection device according to one of the preceding claims characterised in that the movable housing (106) or housing part (16) is guided on guide rails (12, 112) formed on the stands (8, 108).

14. Noise protection device according to claim 13 characterised in that the guide rails (12) are formed of U-shaped guide profiles.

15. Noise protection device according to claim 13 characterised in that the movable housing (106) or housing part (16) is connected with sliding shells (114, 116) which are guided on guide tubes or guide rods (112) fixed to the stands (8, 108).

16. Noise protection device according to one of claims 13 to 15 characterised in that the movable housing (106) or housing part (16) is guided via ball bearings on the stands (8, 108).

17. Noise protection device according to one of the preceding claims characterised in that the movable housing (106) or housing part (16) is connected with one end of at least one tension rope (48, 132) which runs round at least one turn-round roller (46, 134) fixed to the stands (8, 108) and carries at its other end a counterweight.

18. Noise protection device according to claim 17 characterised in that the counterweight is guided in the interior of the stand (8, 108).

**Revendications**

1. Dispositif de protection anti-bruit pour une installation de convoyage horizontal comportant une structure portante et plusieurs parois en matériau insonorisant, supportées par la structure portante et entourant en forme de tunnel, au moins partiellement, l'installation de convoyage ainsi que les produits qu'elle transporte en direction longitudinale, lesdites parois formant toutes ensemble un boîtier insonorisant, l'une de ces parois au moins étant constituée par une plaque de recouvrement verticalement mobile, caractérisé par le fait que la structure portante est constituée par des montants (8, 108) disposés d'un côté du boîtier (6, 106) et sur lesquels est montée de manière coulissante en direction desdits montants, an moins la partie (16,106) de ce boîtier tournée vers lesdits montants (8, 108).

2. Dispositif de protection anti-bruit selon la revendication 1, caractérisé par le fait que la partie (14) du boîtier tournée à l'opposé des montants (8) est fixée sans possibilité de mouvement sur ledit montant (8).

3. Dispositif de protection anti-bruit selon la revendication 2, caractérisé par le fait que des parties de cadre (24) fixées rigidement sur le montant (8) supportent la partie (14) du boîtier fixée sans possibilité de mouvement.

4. Dispositif de protection anti-bruit selon la revendication 2 ou 3, caractérisé par le fait que la partie (14) du boîtier fixé sans possibilité de mouvement comprend la paroi latérale (18) opposée au montant (8), le toit (20), et de préférence au moins une partie (22) de la paroi inférieure.

5. Dispositif de protection anti-bruit selon la revendication 4, caractérisé par le fait que la partie (16) coulissante du boîtier comprend la paroi latérale (38) orientée vers le montant (8), de préférence au moins une partie (42) de la paroi inférieure et une section (40) de la paroi supérieure s'étendant en direction du toit (20), la section (40) venant à l'état fermé du boîtier (6) en chevauchement avec le bord du toit (20).

6. Dispositif de protection anti-bruit selon les revendications 4 et 5, caractérisé par le fait que la partie (16) coulissante du boîtier est mobile vers le bas à partir de sa position fermée et que les arêtes des parois inférieures (22, 42) orientées l'une vers l'autre, sont disposées de manière à se situer à proximité l'une de l'autre.

7. Dispositif de protection anti-bruit selon l'une des revendications 2 à 6, caractérisé par le fait que les parties (14, 16) du boîtier forment chacune une seule pièce.

8. Dispositif de protection anti-bruit selon la revendication 1, caractérisé par le fait que la totalité du boîtier (106) est montée de manière coulissante sur les montants (108).

9. Dispositif de protection anti-bruit selon la revendication 8, caractérisé par le fait que le boîtier (106) peut coulisser vers le haut dans sa position d'ouverture à partir de sa position de fonctionnement.

10. Dispositif de protection anti-bruit selon la revendication 9, caractérisé par le fait que le boîtier (106) comprend deux parois latérales se faisant face (118, 122), le toit (120) reliant les deux parois latérales, et éventuellement, deux parois inférieures (124, 126) qui s'étendent vers l'intérieur à partir de chacune des parois latérales.

11. Dispositif de protection anti-bruit selon l'une des revendications 8 à 10, caractérisé par le fait que le boîtier (106) est réalisé en une seule pièce.

12. Dispositif de protection anti-bruit selon l'une des revendications précédentes, caractérisé par le fait que le boîtier (6, 106) est réalisé de préférence en polycarbonate transparent.

13. Dispositif de protection anti-bruit selon l'une des revendications précédentes, caractérisé par le fait que le boîtier mobile (106) ou la partie (16) du boîtier, est guidé sur des rails de guidage (12, 112) disposés sur les montants (8, 108).

14. Dispositif de protection anti-bruit selon la revendication 13, caractérisé par le fait que les rails de guidage (12) sont constitués de profilés en forme de U.

15. Dispositif de protection anti-bruit selon la revendication 13, caractérisé par le fait que le boîtier (106) ou la partie (16) du boîtier qui coulisse est relié à des douilles de coulissement (114, 116) lesquelles sont guidées sur des tubes ou des tringles de guidage (112) fixés sur les montants (8, 108).

16. Dispositif de protection anti-bruit selon l'une des revendications 13 à 15, caractérisé par le fait que le boîtier (106) ou la partie (16) du boîtier qui coulisse est guidé sur les montants (8, 108) par des roulements à billes.

17. Dispositif de protection anti-bruit selon l'une des revendications précédentes, caractérisé par le fait que le boîtier (106) ou la partie (16) du boîtier qui coulisse est relié à l'une des extrêmités d'au moins un câble de traction (48, 132), lequel passe autour d'au moins une poulie de renvoi (46, 134) fixée sur le montant (8, 108) et qui supporte à son autre extrémité un contre-poids.

18. Dispositif de protection anti-bruit selon la revendication 17, caractérisé par le fait que le contre-poids est guidé à l'intérieur du montant (8, 108).

EP 0 304 555 B1

Fig.2

Fig.1

9